# EUROPÄISCHE PATENTSCHRIFT

(11) **EP 2 461 964 B1**
(45) Veröffentlichungstag und Bekanntmachung des Hinweises auf die Patenterteilung: **05.06.2013**
(21) Anmeldenummer: 10737517.2
(22) Anmeldetag: 24.07.2010
(51) Int. Cl.: B29C 67/24, B29B 7/76, G01N 33/44

(54) **VORRICHTUNG ZUR VERARBEITUNG SCHNELLER POLYMERER REAKTIONSSYSTEME**
DEVICE FOR PROCESSING RAPID POLYMERIC REACTION SYSTEMS
PROCÉDÉ DE TRAITEMENT DE SYSTÈMES RÉACTIONNELS POLYMÈRES RAPIDES

(30) Priorität: 07.08.2009 DE 102009036505
(43) Veröffentlichungstag der Anmeldung: 13.06.2012
(73) Patentinhaber: Bayer Intellectual Property GmbH, 40789 Monheim (DE)
(72) Erfinder: WAGNER, Joachim, 51061 Köln (DE); GLADISCH, Michael, 51429 Bergisch Gladbach (DE); EHBING, Hubert, 51519 Odenthal (DE); HERWEG, Thomas, 51688 Wipperfürth (DE); GOLLAN, Jürgen, 51467 Bergisch Gladbach (DE)
(74) Vertreter: BIP Patents
(86) Internationale Anmeldenummer: PCT/EP2010/004553
(87) Internationale Veröffentlichungsnummer: WO 2011/015294

(56) Entgegenhaltungen:
- EP-A1- 0 529 651
- US-A- 4 795 336
- US-A- 4 908 168
- US-A- 5 067 886

## Beschreibung

Die vorliegende Erfindung betrifft eine Vorrichtung zur maschinellen Verarbeitung schneller polymerer Reaktionssysteme, insbesondere Polyurethansysteme, bei denen ein schneller Rezepturwechsel bei gleichzeitig geringem Rohstoffverbrauch gewünscht ist.

Bei der Entwicklung neuer Werkstoffe müssen Eigenschaften unterschiedlicher Rezepturen getestet werden. Entscheidend ist ein schnelles Screening vieler verschiedener Zusammensetzungen.

Die Verarbeitung schnell reagierender polymerer Produkte, insbesondere Polyurethanprodukte, erfolgt beispielsweise im Reaktionsspritzgussverfahren (RIM, Reaction Injection Moulding). Entsprechende Vorrichtungen enthalten alle Elemente eines chemischen Reaktors.

Die beiden Hauptkomponenten, im Falle von Polyurethan Polyol und Polyisocyanat, werden aus Lagerbehältern in Arbeitsbehälter überführt. In den Arbeitsbehältern werden die Rohstoffe in den verarbeitungsfähigen Zustand gebracht. Hierunter ist in erster Linie eine exakte Temperierung zu verstehen, da jede Temperaturänderung eine Änderung der Viskosität nach sich zieht. Dies kann zu einer Störung im späteren Verarbeitungsprozess oder zu veränderten Materialeigenschaften des Produktes führen. Es besteht jedoch auch die Möglichkeit, über Vormischstationen individuelle Abmischungen aus unterschiedlichen Rohstoffvorlagebehältern vorzunehmen oder Zusatzkomponenten wie Aktivatoren, Stabilisatoren, Treib- oder Flammschutzmittel mit den jeweiligen Komponenten zu mischen und erst diese Mischungen in die Arbeitsbehälter einzufüllen. Um die Komponenten in verarbeitungsfähigem Zustand zu halten, müssen diese temperiert und homogenisiert werden. Entsprechend sind die Arbeitsbehälter meistens mit Heiz- und Kühlmantel versehen. Häufig sorgen auch gesonderte Temperierkreisläufe über Wärmetauscher für die exakte Einhaltung der gewünschten Verarbeitungstemperaturen. Homogenisierungsrührwerke gehören ebenso zur möglichen Ausrüstung wie Nachfüllautomatik, Füllstands-, Druck- und Temperaturanzeigen.

Dosieraggregate fördern nun die Komponenten in einem genau definierten Mischungsverhältnis aus den Arbeitsbehältern zum Mischkopf. Hier treffen die Reaktionspartner aufeinander und werden zum Reaktionsgemisch vereinigt.

Je nach zu verarbeitendem Polyurethansystem werden Präzisionsdosieraggregate verschiedener Förderleistung und Druckbereiche benötigt. Grundsätzlich müssen sie alle hohen bis höchsten Ansprüchen an die Dosiergenauigkeit zur Einhaltung der Stöchiometrie genügen. Neben konventionellen Zahnradpumpen und Reihen-Kolbenpumpen haben sich auch Axial-Kolbenpumpen bewährt.

Generell wird zwischen zwei Verarbeitungsverfahren unterschieden: dem Niederdruck (ND)- und dem Hochdruck (HD)-Verfahren.

Während im ND-Verfahren die Komponentenströme mit Drücken im Bereich von 3 bis 40 bar beaufschlagt werden, arbeitet das HD-Verfahren bei Drücken der Komponenten im Bereich von 100 bis 400 bar. Die Vermischung der Komponenten im ND-Verfahren geschieht durch Rührwerksmischkammern oder mit statischen Mischern; beim HD-Verfahren werden die Komponenten nach dem Gegenstrom-Injektionsprinzip vermischt: die erzeugte hohe kinetische Energie der Komponentenströme wird beim Eintritt in die Mischkammer zur Vermischung benutzt.

Beim ND-Verfahren werden die zwei Rohstoffkomponenten vor der Vermischung im Niederdruckbereich, also bei 3 bis 40 bar, in der Regel über den Mischkopf zirkuliert. Bei Abgabe des "Schusses" öffnen zwangsgesteuert und synchron Mischkopfventile, welche die Komponenten im geforderten Mischungsverhältnis in die Mischkammer entlassen. Eine entsprechende ND-Mischkammer besteht beispielsweise aus einem Hohlzylinder mit einem Intensivrührwerk, aus dem das Reaktionsgemisch nach der Vermischung ausgetragen wird. Das Rührwerk muss regelmäßig von verbleibenden Restmengen des Reaktionsgemisches beispielsweise durch Spülmittel gereinigt werden. Obwohl dies automatisch erfolgt, sind Reinigungsstillstände der Niederdruckmaschine unvermeidlich. Die Niederdruckverarbeitung wird vorzugsweise bei weitgehend kontinuierlich arbeitenden Polyurethan-Verarbeitungsanlagen eingesetzt (z.B. Weichblockschaumherstellung).

Es ist auch bekannt, die Komponenten direkt über einen statischen Mischer zu vermischen; der Vorteil dieses Verfahrens besteht darin, dass bei der Vermischung keine bewegten Maschinenteile notwendig sind. Die Nachteile dieses Verfahrens bestehen in der aufwendigen Reinigungsprozedur des statischen Mischers und der Tatsache, dass dieser Mischer immer mit reagierendem Polymer gefüllt ist. Eine Unterbrechung der Dosierung zieht damit immer entweder eine Produktion von Abfallware oder ein Zusetzen des Mischers nach sich. Zur Vermeidung dieser Nachteile können Kunststoff-Wegwerf-Mischer, wie sie beispielsweise von der Fa. Agens Stratmann, Oelde, oder der WEKEM GmbH, Werne, vertrieben werden, eingesetzt werden. Hieraus ergibt sich jedoch ein weiterer Nachteil. Hohe Förderdrucke können aus Gründen der mechanischen Stabilität des Mischers nicht realisiert werden.

Im HD-Verfahren werden die Komponenten zunächst unter einen hohen Druck von 100 bis 400 bar gesetzt - dies wird im folgenden als komprimiert bezeichnet; dieses Material fördern Dosieraggregate dann unter dem vorliegenden Arbeitsdruck zum Mischkopf und nach dem Stande der Technik in einem Kreislauf über ein Entspannungsventil zurück in die Arbeitsbehälter. Ein Steuerkolben im Mischkopf wird bei Auslösen des "Schusses" zurückgezogen und gibt dabei den komprimierten Komponenten synchron den Zugang zu den Mischkopfdüsen frei. Polyol- und Isocyanatkomponente treffen mit beispielsweise 200 bar in der Mischkammer aufeinander und vermischen sich dabei. Wenn die vordefinierte Produktmenge eingeschossen ist, verschließt der Steuerkolben die Mischkopfdüsen und gibt dadurch wieder den Weg für die Rezirkulation der unverbrauchten Komponenten frei; durch exakte Führung des Stößels reinigt sich dabei die Mischkammer automatisch mit, d.h. das noch nicht ausgetretene Reaktionsgemisch wird rückstandsfrei aus der Mischkammer gefördert. Zusätzliche Reinigungsmittel sind hier nicht erforderlich. Hochdruckmaschinen können höher ausgelastet werden als Niederdruckmaschinen, weil Reinigungsstillstände fast vollständig vermieden werden.

Das Dosieren der Komponenten im richtigen stöchiometrischen Verhältnis muss in beiden Verfahren reproduzierbar sein und mit hoher Genauigkeit erfolgen. Deswegen kommen nur Präzisionsdosieraggregate zur Anwendung.

Beim Wechsel von Rezepturen sind sowohl beim ND- als auch beim HD-Herstellverfahren die Rohstoffbehälter und die Zirkulationsleitungen vollständig zu reinigen, was in der industriellen Produktion kein wirkliches Problem darstellt, da solche Produktwechsel vergleichsweise selten sind. Für solche Verfahren in Entwicklungslabors ist dieser Rezepturwechsel jedoch sehr häufig , zum Teil mehrmals am Tag. Dies stellt einen deutlichen Nachteil für den Einsatz solcher Maschinen dar.

Die Herstellung polymerer Produkte im Reaktionsspritzgussverfahren ist im Stand der Technik bekannt (siehe beispielsweise Reinhard Leppkes: Polyurethane, "Die Bibliothek der Technik", 5. Auflage, Band 91, S. 23 bis 27, Verlag Moderne Industrie 1993 oder Ullmann's Enzyklopädie der Technischen Chemie, 4. Auflage, Band 19, S. 316 bis 317, Verlag Chemie, Weinheim 1980).

Unterschiedliche Hersteller bieten entsprechende Geräte an. Im Handel erhältlich sind Vorrichtungen zum Reaktionsspritzgussverfahren, deren Schussvolumina im Bereich zwischen 16 bis 50 cm³ variieren und bis zu mehreren 100 Litern reichen.

Neben einer großtechnischen Verarbeitung sind auch Maschinen für die Verwendung im Technikums-Maßstab mit kleineren Schussvolumina bekannt. Sowohl die Anlage VARIO-MIX^{®} von Hilger und Kern als auch die PSM 3000 Polyurethan Hochdruckanlage der Isotherm AG sind für kleine Schussvolumina geeignet. Die PSM 3000 von Isotherm hat jedoch einen Platzbedarf von 15 m² und ist damit im üblichen Laborbetrieb schlecht einsetzbar. Der Druckaufbau erfolgt über hydraulische Kolben. Beide Anlagen besitzen lange Zu- und Zirkulationsleitungen von den Arbeitsbehältern bis hin zur Mischkammer und somit große Leitungsvolumina. Die Nachteile dieser Bauweise für einen häufigen Rezepturwechsel sind bereits oben erwähnt worden.

Solche und andere moderne Kleinmengenverarbeitungsmaschinen für den Labor- oder Technikum-Maßstab arbeiten üblicherweise mit je einem Kanal der Rohstoffversorgung und mit zwei im Tandembetrieb arbeitenden Druckkolben und haben dadurch einen großen Rohstoffbedarf und einen größer zu reinigenden Material-führenden Leitungsstrang. Bedingt durch die Konstruktionen der Maschinen mit Rohstoffkreisläufen, ist eine Rohstoffmenge im Bereich von mindestens 10 kg notwendig. Ein schneller Rezepturwechsel ist hier nicht möglich, da die Reinigung der Leitungen sowie des Mischkopfes entsprechend zeitintensiv sind.

Ein wirtschaftliches Screening neuer Materialien ist hier nicht möglich, da einerseits ein hoher Verbrauch an Rohstoffen besteht, welche sich in den Leitungen befinden. Weiterhin stellt auch der hohe Zeitbedarf bei der Reinigung bei einem Rezepturwechsel einen Kostenfaktor dar.

Die Druckschrift EP-A-529651 offenbart eine Vorrichtung gemäß dem Oberbegriff des Anspruchs 1.

Die Druckschrift US-A-4908168 offenbart eine Labor-RIM-Vorrichtung, welche kleine Mengen von Reagenzien behandeln kann.

Die Aufgabe der vorliegenden Erfindung besteht demnach darin, eine Vorrichtung zum Reaktionsspritzgussverfahren polymerer Reaktionssysteme mit einem geringen Rohstoffbedarf und Platzbedarf bereitzustellen. Insbesondere soll der Rohstoffbedarf je Komponente weniger als 200 ml je Komponente betragen. Ein Rezepturwechsel soll schnell möglich sein, das heißt auch, dass die Reinigung der Vorrichtung schnell und einfach durchzuführen sein soll. Ein solcher Rezepturwechsel sollte in einem Zeitraum von weniger als 60 min durchführbar sein. Die erhaltenen Ergebnisse müssen reproduzierbar und auf den großtechnischen Maßstab übertragbar sein. Die Spritzform soll eine Fläche im Bereich der Größe von DIN A5 und eine Dicke von etwa 2 bis 10 mm aufweisen. Gleichzeitig soll eine entsprechende Vorrichtung einen geringen Platzbedarf aufweisen, damit ein Betrieb im Labor beispielsweise in einem Stehabzug möglich ist.

Die der vorliegenden Erfindung zugrundeliegende Aufgabe wird durch eine Vorrichtung gelöst, in welcher wenigstens zwei Komponenten unter hohem Druck maschinell verarbeitet werden. In einer solchen Vorrichtung werden die wenigstens zwei Komponenten unter hohem Druck, mit nur je einem Druckkolben und gegebenenfalls mit mehreren Arbeitsbehältern je Rohstoffkanal zum Komprimieren der jeweiligen Komponenten, in einem Mischkopf vermischt.

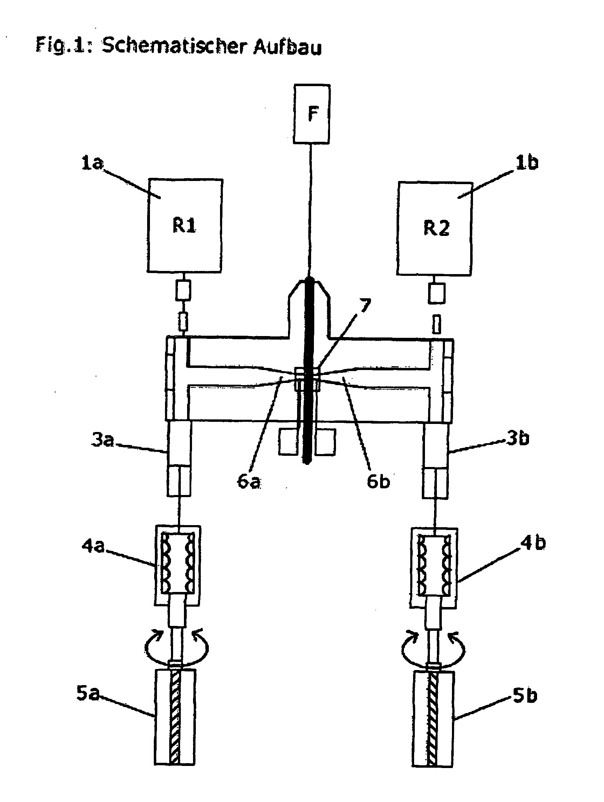

Einen möglichen Aufbau zeigt schematisch Fig. 1. Eine erfindungsgemäße Vorrichtung umfasst die Arbeitsbehälter 1a und 1b, welche die Reaktionskomponenten R1 beziehungsweise R2 enthalten. Die Arbeitsbehälter 1a und 1b können neben Druckluft auch mit alternativen Inertgasen (Druckbereich 0-10 bar) beaufschlagt werden, um Luftblaseneinschlüsse in den Reaktionskomponenten R1 und R2 zu vermeiden. Zwischen den Arbeitsbehältern 1a und 1b und dem Mischaggregat befinden sich federrückgestellte Absperrventile 9a und 9b (normal offen) elektrisch oder pneumatisch angetrieben, welche primärseitig mit 0-10 bar und Sekundärseitig mit 0-400 bar beaufschlagt werden können. Der Aufbau der Drücke in den Druckkolben 3a und 3b erfolgt jeweils durch elektrisch angetriebene Linearmotoren 5a und 5b, welche über einen mechanischen Energiespeicher mit Tellerfedern 4a und 4b die Rohstofflösungen in den Druckkolben 3a und 3b komprimieren. Über Spritzdüsen 6a und 6b gelangen die Komponenten in die Mischkammer 7 und von dort in die Form F. Der zentrale Bereich der Vorrichtung, bestehend aus der Mischkammer 7 und den Spritzdüsen 6a und 6b ist als vergrößerter Ausschnitt innerhalb der Fig. 1 dargestellt.

In einer erfindungsgemäßen Vorrichtung befinden sich die Druckkolben 3a und 3b und die Arbeitsbehälter 1a und 1b in räumlicher Nähe zum Mischkopf. Hierdurch wird gewährleistet, dass das Leitungsvolumen 5 cm³ pro Rohstoffkanal nicht überschreitet. Der jeweilige Rohstoff fließt aus dem Arbeitsbehälter 1a bzw. 1b bei geschlossenem Mischkopf 7 in die jeweiligen Druckkolben 3a und 3b und wird dort nach Schließen der Absperrventile 9a und 9b komprimiert. Durch mehrfaches, zyklisches Befüllen und Entleeren der Rohstoffkomponenten in die jeweiligen Rohstoffvorlagen wird eventuell im System befindliche Luft aus den Leitungen in die Arbeitsbehälter gedrückt. Die Leitungen und die Arbeitsbehälter und damit auch das spätere Endprodukt sind somit frei von Lufteinschlüssen. Bei Bedarf können aber auch über Rührwerke mit geeigneten Rührwerksblättern spezielle Gase, aber auch Luft, in die Rohstoffe eingearbeitet und bereits im Vorlagebehälter unter Druck bis maximal 10 bar homogenisiert werden. Dies erlaubt die Herstellung von geschäumten Endprodukten.

Die Beaufschlagung des flüssigen Rohmaterials in den Druckkolben 3a und 3b mit Druck erfolgt mit Hilfe elektrisch angetriebener Linearmotoren 5a und 5b. Durch die Verwendung elektrischer Motoren sinkt der Raumbedarf der gesamten Apparatur. Hydraulisch arbeitende Druckkolben, wie sie aus dem Stand der Technik bekannt sind, haben einen deutlich erhöhten Raumbedarf.

Erfindungsgemäß erfolgt die Druckbeaufschlagung des flüssigen Rohmaterials über gekoppelte, mechanische Energiespeicher 4a und 4b, welche in der konkreten Bauform hier aus Tellerfedern bestehen. Das Rohmaterial wird im Druckkolben 3a beziehungsweise 3b auf einen Druck im Bereich von 100 bis 400 bar komprimiert und die Tellerfedern speichern dabei Energie für den Anlaufvorgang der Dosierung. Sie sorgen damit bereits im Anlauf der Dosierung - bis zur mit konstanter Bewegung ablaufenden Dosierung - für einen weitgehend konstanten Druck.

Das Zurückziehen des Mischkammerausdrückstößels in der Mischkammer 7 für die Zeitdauer der Dosierzeit öffnet die Rohstoffkanäle und führt zur Hochdruckvermischung der Reaktionspartner mit anschließendem Austrag des reagierenden Materials in die Form F. Das Bewegen des Mischkammerausdrückstößels kann wahlweise elektrisch oder pneumatisch erfolgen.

Das Einbringen der Rohstoffkomponenten in die Mischkammer erfolgt über Düsen 6a und 6b. Diese befinden sich auf einer Linie beziehungsweise die Einlässe für die Düsen im Mischkopf liegen einander gegenüber. Die Düsen sind jeweils als Ringspaltdüse durch eine Blende und eine zentrisch gelagerte, konische Nadel ausgebildet. Die Düsenquerschnitte (Veränderung des Ringspaltes) können vor und auch während des Mischvorgangs von außen durch Verändern der Eindringtiefe der konischen Nadel verstellt werden. Eine solche Einstellung ist sowohl manuell als auch elektronisch möglich. Dies erlaubt die genaue Anpassung von Mischdruck und Dosierflussrate. Entsprechend angebrachte Sensoren für Arbeitsbehälterdruck, Druckkolbendruck, Mischdruck, Kolbenposition, Produkttemperaturen und Vermischungstemperaturen, erlauben eine detaillierte Beobachtung des Verarbeitungsverfahrens . Eine Übertragung der Sensordaten zum PC in Zeitabschnitten von wenigen Millisekunden erlaubt darüber hinaus eine Steuerung der Reaktion sogar während der Reaktionsführung.

Der Mischkopf selbst weist vorzugsweise ausschließlich lineare Kanäle auf. Diese erlauben ein einfaches Reinigen des Mischkopfes von Außen durch Metallstempel ohne zeitaufwändige Demontage. Alle Zuleitungen im Mischkopf befinden sich in einer Ebene. Die eigentliche Mischkammer ist ein zylindrischer Einsatz, der auch als Kunststoffbauteil einfach und kostengünstig hergestellt werden kann. Dieser Einsatz ist im Mischkopf mittels Schrauben fixiert und kann durch Lösen dieser Schrauben einfach ausgebaut werden. Ein Wechseln der Mischkammer bei einem Rezepturwechsel ist demnach problemlos möglich. Eine erfindungsgemäße Mischkammer weist beispielsweise ein Mischungsvolumen von etwa 2 bis 3 mm³ auf, wobei das Gesamtvolumen bis zum Übergang der Mischkammer in die Form inklusive Zuleitungsnadel ≤ 15 mm³ beträgt. Aufgrund der geringen Leitungsvolumina beträgt das benötigte Rohstoffvolumen ≤ 200 cm³ je Komponente.

Die Arbeitsbehälter 1a und 1b, die Druckkolben 3a und 3b und der Mischkopf 7 sind unabhängig voneinander temperierbar. So ist es möglich, die Rohstoffe auf eine Temperatur bis zu 80 °C aufzuheizen. Ebenso kann die Form, welche an den Auslauf des Mischkopfes verfahren bzw. angeschlossen wird, auf eine Temperatur von bis 130 °C geheizt werden. Es ist auch möglich, eine Reaktionsmischung nicht in eine Form zu schießen, sondern in ein geeignetes, offenes Gefäß. Dies ermöglicht beispielsweise die Kontrolle bezüglich Reaktivität und Vermischungsgüte, Farbe, Viskosität und Homogenität einer Rezepturformulierung unter den eingestellten Verarbeitungsbedingungen.

Die erfindungsgemäße Vorrichtung ermöglicht das Verarbeiten von reaktiven Komponenten mit Startzeiten im Bereich von 0,5 bis weit über 100 s. Die Dosierzeiten können dabei zwischen 0,3 bis 20 s variieren, wobei die Genauigkeit der Dosierzeiten beispielsweise eine Millisekunde betragen kann. Höhere Dosierzeiten sind bei Bedarf einfach realisierbar. Es können Rohstoffe verarbeitet werden, die beispielsweise eine Viskosität von 1 bis 10000 mPas aufweisen, wobei die Austragsleistung im Bereich von 100 g/s bis unter 0,5 g/s betragen kann .

Die Rohstoffkomponenten werden beispielsweise im Hochdruckgegenstrom bei 100 bis 400 bar in die Mischkammer eingebracht. Durch kurze lineare Leitungen sowie den Hochdruckbetrieb kann der Zeitbedarf für einen Rezepturwechsel gering gehalten werden. Ein solcher ist in einem Zeitrahmen von etwa 15 bis 30 min möglich. Zudem weist die erfindungsgemäße Vorrichtung einen geringen Platzbedarf von etwa 2 m² auf. In einem Labor könnte demnach die erfindungsgemäße Vorrichtung, welche beispielsweise mit Hilfe von Rollen einfach zu verschieben ist, in einem Stehabzug untergebracht werden.

Die Steuerung und Kontrolle der Vorrichtung erfolgt elektronisch über einen angeschlossenen PC und angebundener SPS. Über einen Touchscreen ist eine einfache Bedienung möglich. Mit Hilfe entsprechender Programme können alle Sensorparameter kontinuierlich überwacht und die Verfahrensparameter bei Bedarf reguliert werden. Auch die Produkttemperaturen sowie die Formtemperatur können entsprechend gesteuert werden.

## Patentansprüche

1. Vorrichtung zur maschinellen Verarbeitung polymerer Reaktionssysteme mit wenigstens zwei Komponenten unter hohem Druck mit nur je einem Druckkolben und gegebenenfalls mehreren Arbeitsbehältern je Rohstoffkanal zum Komprimieren der jeweiligen Komponenten und einem Mischkopf, **dadurch gekennzeichnet, dass** das Leitungsvolumen zwischen dem Druckkolben und dem Mischkopf ≤ 5 cm³ pro Rohstoffkanal beträgt.

2. Vorrichtung gemäß Anspruch 1, **dadurch gekennzeichnet, dass** elektrische Linearmotoren die in den Druckkolben befindlichen flüssigen Rohmaterialien komprimieren.

3. Vorrichtung gemäß Anspruch 2, **dadurch gekennzeichnet, dass** die elektrischen Linearmotoren über einen mechanischen Energiespeicher die Rohmaterialien komprimieren.

4. Vorrichtung gemäß Anspruch 3, **dadurch gekennzeichnet, dass** der mechanische Energiespeicher Tellerfedern aufweist.

5. Vorrichtung gemäß einem der Ansprüche 1 bis 4, **dadurch gekennzeichnet, dass** die Rohmaterialen in den Druckkolben auf einen Druck im Bereich von jeweils 100 bis 400 bar komprimiert werden.

6. Vorrichtung gemäß einem der Ansprüche 1 bis 5, **dadurch gekennzeichnet, dass** alle Zuleitungen im Mischkopf sich in einer Ebene befinden und die Einspritzdüsen, durch welche die Rohmaterialien in den Mischkopf eintreten sich auf einer gemeinsamen Linie befinden.

7. Vorrichtung gemäß Anspruch 6, **dadurch gekennzeichnet, dass** die Düsenquerschnitte manuell oder elektronisch verstellbar sind.

8. Vorrichtung gemäß einem der Ansprüche 1 bis 7, **dadurch gekennzeichnet, dass** der Mischkopf ausschließlich lineare Kanäle aufweist,

9. Vorrichtung gemäß Anspruch 8, **dadurch gekennzeichnet, dass** die Mischkammer eine Kunststoffauskleidung umfasst.

10. Vorrichtung gemäß einem der Ansprüche 1 bis 9, **dadurch gekennzeichnet, dass** der Mischkopf ein Mischungsvolumen von ≤ 15 mm³ inklusive der Nadel aufweist.

11. Vorrichtung gemäß einem der Ansprüche 1 bis 10, **dadurch gekennzeichnet, dass** das benötigte Rohstoffvolumen je Komponente 200 cm³ oder weniger beträgt.

12. Vorrichtung gemäß einem der Ansprüche 1 bis 11, **dadurch gekennzeichnet, dass** die Arbeitsbehälter temperierbar bis zu einer Temperatur von 80 °C sind.

13. Vorrichtung gemäß einem der Ansprüche 1 bis 12, **dadurch gekennzeichnet, dass** die Form temperierbar bis zu einer Temperatur von 130 °C ist.

14. Vorrichtung gemäß einem der Ansprüche 1 bis 13, **dadurch gekennzeichnet, dass** sie eine Steuerung aufweist, wodurch Mischdruck, Kolbenvorschub und Druckaufbau in der Form während der Reaktionsführung kontrolliert und gesteuert werden können.

15. Verfahren zur Herstellung polymerer Formkörper im RIM-Verfahren unter Verwendung einer Vorrichtung gemäß einem der Ansprüche 1 bis 14.

## Claims

1. Device for the machine-based processing of polymeric reaction systems comprising at least two components under high pressure with only one pressure piston each and optionally a number of working vessels per raw material channel for compressing the respective components and a mixing head, **characterized in that** the conduit volume between the pressure piston and the mixing head is ≤ 5 cm³ per raw material channel.

2. Device according to Claim 1, **characterized in that** electric linear motors compress the liquid raw materials present in the pressure pistons.

3. Device according to Claim 2, **characterized in that** the electric linear motors compress the raw materials by means of a mechanical energy storage system.

4. Device according to Claim 3, **characterized in that** the mechanical energy storage system has disc springs.

5. Device according to one of Claims 1 to 4, **characterized in that** the raw materials are compressed in the pressure pistons to a pressure in the range of in each case 100 to 400 bar.

6. Device according to one of Claims 1 to 5, **characterized in that** all of the feed lines in the mixing head are in one plane and the injection nozzles through which the raw materials enter the mixing head are arranged on a common line.

7. Device according to Claim 6, **characterized in that** the nozzle cross sections can be adjusted manually or electronically.

8. Device according to one of Claims 1 to 7, **characterized in that** the mixing head has exclusively linear channels.

9. Device according to Claim 8, **characterized in that** the mixing chamber comprises a plastic lining.

10. Device according to one of Claims 1 to 9, **characterized in that** the mixing head has a mixing volume of ≤ 15 mm³, including the needle.

11. Device according to one of Claims 1 to 10, **characterized in that** the required volume of raw material per component is 200 cm³ or less.

12. Device according to one of Claims 1 to 11, **characterized in that** the working vessels can be temperature-controlled up to a temperature of 80°C.

13. Device according to one of Claims 1 to 12, **characterized in that** the mould can be temperature-controlled up to a temperature of 130°C.

14. Device according to one of Claims 1 to 13, **characterized in that** it has a control system, whereby the mixing pressure, piston advancement and pressure build-up in the mould can be monitored and controlled during the course of the reaction.

15. Method for producing polymeric moulded parts by the RIM process using a device according to one of Claims 1 to 14.

## Revendications

1. Dispositif de traitement par machine de systèmes réactionnels polymères contenant au moins deux composants sous pression élevée, comprenant seulement un piston et éventuellement plusieurs contenants de travail par canal de matière première pour la compression des composants respectifs et une tête de mélange, **caractérisé en ce que** le volume de conduite entre le piston et la tête de mélange est ≤ 5 cm³ par canal de matière première.

2. Dispositif selon la revendication 1, **caractérisé en ce que** des moteurs linéaires électriques compriment les matières premières liquides se trouvant dans les pistons.

3. Dispositif selon la revendication 2, **caractérisé en ce que** les moteurs linéaires électriques compriment les matières premières par un accumulateur d'énergie mécanique.

4. Dispositif selon la revendication 3, **caractérisé en ce que** l'accumulateur d'énergie mécanique comprend des ressorts à disque.

5. Dispositif selon l'une quelconque des revendications 1 à 4, **caractérisé en ce que** les matières premières dans les pistons sont comprimées à une pression dans la plage allant à chaque fois de 100 à 400 bar.

6. Dispositif selon l'une quelconque des revendications 1 à 5, **caractérisé en ce que** toutes les conduites dans la tête de mélange se trouvent dans un plan et les buses d'injection par lesquelles les matières premières entrent dans la tête de mélange se trouvent sur une ligne commune.

7. Dispositif selon la revendication 6, **caractérisé en ce que** les sections des buses sont ajustables manuellement ou électroniquement.

8. Dispositif selon l'une quelconque des revendications 1 à 7, **caractérisé en ce que** la tête de mélange comprend exclusivement des canaux linéaires.

9. Dispositif selon la revendication 8, **caractérisé en ce que** la chambre de mélange comprend un revêtement plastique.

10. Dispositif selon l'une quelconque des revendications 1 à 9, **caractérisé en ce que** la tête de mélange présente un volume de mélange ≤ 15 mm³, y compris l'aiguille.

11. Dispositif selon l'une quelconque des revendications 1 à 10, **caractérisé en ce que** le volume de matière première nécessaire par composant est de 200 cm³ ou moins.

12. Dispositif selon l'une quelconque des revendications 1 à 11, **caractérisé en ce que** les contenants de travail sont conditionnables jusqu'à une température de 80 °C.

13. Dispositif selon l'une quelconque des revendications 1 à 12, **caractérisé en ce que** le moule est conditionnable jusqu'à une température de 130 °C.

14. Dispositif selon l'une quelconque des revendications 1 à 13, **caractérisé en ce qu'**il comprend un dispositif de commande par lequel la pression de mélange, l'avancement des pistons et la montée de pression dans le moule peuvent être contrôlés et commandés pendant la réalisation de la réaction.

15. Procédé de fabrication de corps moulés polymères par le procédé RIM utilisant un dispositif selon l'une quelconque des revendications 1 à 14.
